Europäisches Patentamt

European Patent Office

Office européen des brevets

(19)

(11) EP 0 742 613 B1

(12) FASCICULE DE BREVET EUROPEEN

(45) Date de publication et mention
de la délivrance du brevet:
**25.08.1999 Bulletin 1999/34**

(51) Int Cl.⁶: **H01S 3/06**, H01S 3/113

(21) Numéro de dépôt: **96401012.8**

(22) Date de dépôt: **10.05.1996**

(54) **Cavité microlaser et microlaser solide impulsionnel à déclenchement passif et à commande externe**

Mikrolaserresonator und pulsierter Festkörpermikrolaser mit passiver Güteschaltung und mit externem Triggersignal

Microlaser cavity and pulsed passively Q-switched solid state microlaser using an external trigger

(84) Etats contractants désignés:
**DE FR GB IT**

(30) Priorité: **12.05.1995 FR 9505651**

(43) Date de publication de la demande:
**13.11.1996 Bulletin 1996/46**

(73) Titulaire: **COMMISSARIAT A L'ENERGIE ATOMIQUE**
**75015 Paris (FR)**

(72) Inventeurs:
• **Thony, Philippe**
**38000 Grenoble (FR)**
• **Rabarot, Marc**
**38170 Seyssinet (FR)**

(74) Mandataire: **Dubois-Chabert, Guy et al**
**c/o BREVATOME**
**25, rue de Ponthieu**
**75008 Paris (FR)**

(56) Documents cités:
EP-A- 0 596 714       DE-A- 1 514 411
US-A- 4 191 931       US-A- 5 394 413

• PATENT ABSTRACTS OF JAPAN vol. 012, no. 425 (E-681), 10 Novembre 1988 & JP-A-63 164386 (MATSUSHITA ELECTRIC IND CO LTD), 7 Juillet 1988,
• PATENT ABSTRACTS OF JAPAN vol. 004, no. 162 (E-033), 12 Novembre 1980 & JP-A-55 110082 (FUJITSU LTD), 25 Août 1980,

EP 0 742 613 B1

## Description

Domaine technique

L'invention se rapporte au domaine des microlasers solides déclenchés.

L'avantage principal du microlaser réside dans sa structure en un empilement de multicouches, qui est sa caractéristique essentielle. Le milieu actif laser est constitué par un matériau de faible épaisseur (entre 150-1000 μm) et de petites dimensions (quelques mm$^2$), sur lequel des miroirs diélectriques de cavité sont directement déposés. Ce milieu actif peut être pompé par une diode laser III-V qui est soit directement hybridée sur le microlaser, soit couplée à ce dernier par fibre optique. La possibilité d'une fabrication collective utilisant les moyens de la microélectronique autorise une production de masse de ces microlasers à très faible coût.

Les microlasers ont de nombreuses applications, dans des domaines aussi variés que l'industrie automobile, l'environnement, l'instrumentation scientifique, la télémétrie.

Etat de l'art antérieur

Les microlasers connus ont en général une émission continue de quelques dizaines de mW de puissance. Cependant, la plupart des applications citées ci-dessus, nécessitent des puissances crêtes (puissance instantanée) de quelques kW délivrées pendant $10^{-8}$ à $10^{-9}$ secondes, avec une puissance moyenne de quelques dizaines de mW.

Dans les lasers solides, on peut obtenir de telles puissances crêtes élevées en les faisant fonctionner en mode pulsé à des fréquences variant entre 10 et $10^4$ Hz. Pour cela, on utilise des procédés de déclenchement de la cavité.

Une cavité peut être déclenchée de manière active ou passive.

Dans le cas d'un déclenchement actif, la valeur des pertes est pilotée de façon externe par l'utilisateur, par exemple par un miroir de cavité tournant, par des moyens acousto-optiques ou électro-optiques intracavité changeant soit le trajet du faisceau, soit son état de polarisation. La durée de stockage, l'instant d'ouverture de la cavité ainsi que le taux de répétition peuvent être choisis séparément.

Dans le domaine des microlasers, une technique de déclenchement actif est décrite dans l'article de J.J. Zayhowski et al., intitulé "Diode-pumped microchip lasers electro-optically Q-switched at high pulse repetition rates", paru dans Optics letters, vol. 17, N°17, pp. 1201-1203, (1992).

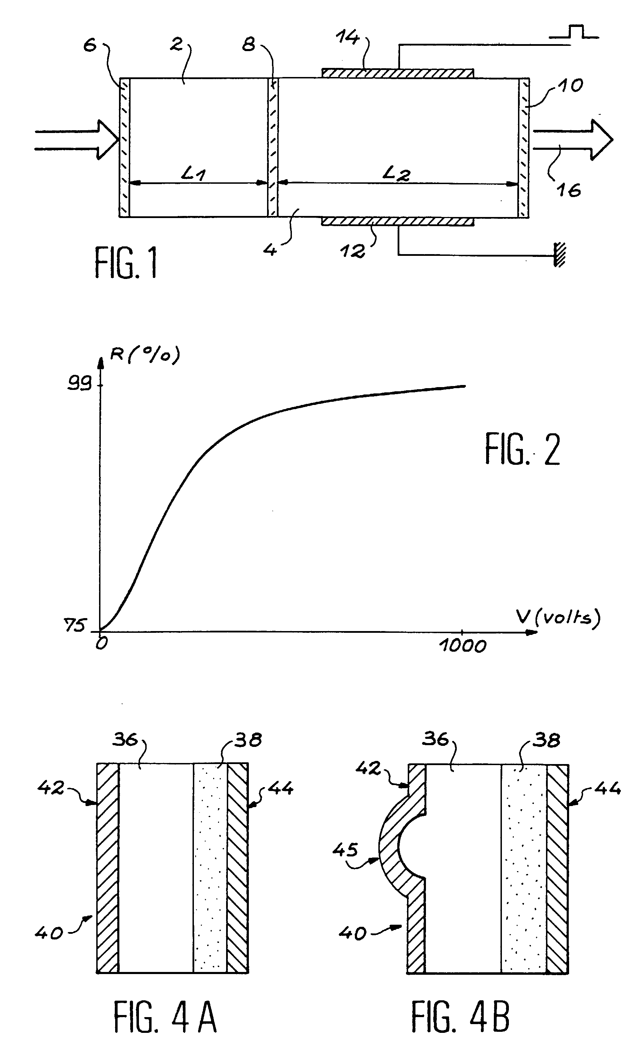

Dans ce document, le déclenchement est réalisé dans une configuration de deux cavités Fabry-Perot couplées. Un tel ensemble est illustré sur la figure 1, où la référence 2 désigne le milieu actif laser et la référence 4 un matériau électro-optique déclencheur (LiTaO$_3$). Le milieu actif 2 du laser forme, avec un miroir d'entrée 6 et un miroir intermédiaire 8 une première cavité Fabry-Perot. Le matériau déclencheur forme, avec le miroir intermédiaire 8 et le miroir de sortie 10, une deuxième cavité Fabry-Perot. Le déclenchement se fait en modifiant la longueur optique du matériau déclencheur 4 par une action externe : des électrodes de déclenchement 12, 14 sont placées perpendiculairement à l'axe du faisceau laser 16 de part et d'autre du matériau 4. Si une tension V est appliquée entre ces électrodes, un champ électrique E=V/e, où e est la distance entre les électrodes (ce qui correspond à l'épaisseur du matériau électro-optique) en résulte. L'indice optique n$_2$, et par conséquent la longueur optique n$_2$L$_2$, du matériau électro-optique est modifié par l'action du champ E. Ceci affecte le couplage des cavités et modifie la réflectivité de la cavité Fabry-Pérot formée par les miroirs 8 et 10 et par le matériau déclencheur 4, vue par le milieu laser.

Pour un microlaser YAG:Nd émettant vers 1,06 μm et un matériau déclencheur constitué par du LiTaO$_3$ d'épaisseur environ égale à 1 mm, on a typiquement : $n_1=1{,}8$, $n_2=2$, $L_1=500$ μm, $L_2=900$μm. La variation maximum de réflectivité de la deuxième cavité est obtenue pour $d\lambda/\lambda=dL_2/L_2=dn_2/n_2=10^{-4}$ environ. Cette variation d'indice est obtenue en appliquant un champ électrique de $10^4$ volts/cm environ dans le matériau déclencheur. Il est possible d'assimiler la deuxième cavité (électro-optique) à un miroir de sortie de la première cavité constituée du matériau laser. La réflectivité de ce miroir de sortie est variable et commandée par la tension de commande externe appliquée aux électrodes 12, 14. La figure 2 montre la variation de la réflectivité R de la deuxième cavité en fonction de la tension V appliquée. Pour le cas où les trois miroirs 6, 8, 10 ont des réflectivités respectivement égales à 99%, 95% et 50%, la réflectivité de la deuxième cavité va varier entre 75% et 99%. Ainsi, pour le milieu actif ceci revient à faire varier la réflectivité du miroir de sortie entre 75% et 99%, par une commande de tension externe. En fait, on voit d'après le diagramme de la figure 2 qu'il faut appliquer plusieurs centaines de volts pour obtenir une réflectivité voisine de 90% et qu'il faut appliquer environ 1000 volts pour obtenir une réflectivité de l'ordre de 99%, et ceci pour une distance inter-électrodes de 1mm.

Ce type de microlasers présente des problèmes qui en empêchent l'utilisation en pratique.

Tout d'abord, le microlaser est fabriqué par un procédé manuel (il met en oeuvre des étapes de collage de morceaux prédécoupés). Ceci impose une limite inférieure pour les dimensions géométriques qui sont au minimum autour de 1mm, et en particulier pour la distance entre les deux électrodes. En outre, un autre problème est la nécessité d'atteindre un champ E suffisant pour le déclenchement. Il est en effet nécessaire d'appliquer une tension de l'ordre de 1000 volts entre les deux électrodes, et ceci en un temps très court (moins de 1 nanoseconde) et sur des puces laser d'environ 1 mm³ de volume. Ceci est très difficile à réaliser en pratique et nécessite une électronique sophistiquée incompatible avec la simplicité et le bas coût de production du microlaser.

Dans le cas d'un déclenchement dit passif, les pertes variables sont introduites dans la cavité sous forme d'un matériau (appelé Absorbant Saturable -A.S.-) qui est fortement absorbant à la longueur d'onde laser et à faible densité de puissance, et qui devient pratiquement transparent lorsque cette densité dépasse un certain seuil qu'on appelle intensité de saturation de l'A.S.

Par rapport au microlaser à déclenchement actif, le microlaser à déclenchement passif est un dispositif autodéclenché sans aucun problème d'alimentation : il n'y a pas de tension élevée ni de courant fort à mettre en oeuvre, il est d'autant plus simple à fabriquer. Par contre, le contrôle temporel de l'émission laser est beaucoup plus difficile à réaliser. En effet, certaines caractéristiques sont réglées à la fabrication, une fois pour toutes. Notamment, le niveau de perte de l'absorbant saturable est fixé par les caractéristiques (composition, épaisseur, caractéristiques spectroscopiques) de cet absorbant saturable. Ainsi, deux types de dérives temporelles ont pu être observés dans un microlaser à déclenchement passif :

-   une dérive de la fréquence de fonctionnement, dans le temps, cette dérive pouvant parfois atteindre 50% en quelques minutes (dérive de 7 kHz sur 16 kHz au bout d'environ 10 minutes), cette dérive en fréquence s'accompagnant souvent d'une fluctuation d'amplitude (jusqu'à plus de 10%, dans la même période de temps),
-   une variation du retard à l'amorçage, ou "jitter", cette variation pouvant atteindre plus de 10 nanosecondes.

Le document US-5 394 413 décrit un microlaser déclenché passivement.

Le document DE-1 514 411 décrit un dispositif laser macroscopique, comportant un barreau laser et un absorbant saturable qui peut être saturé par une source de lumière extérieure.

Par conséquent, il se pose le problème de trouver une source microlaser solide à pompage optique alliant les avantages du système de déclenchement passif (pas d'électronique complexe d'alimentation supplémentaire) et ceux qui découlent du système de déclenchement actif (contrôle temporel et régularité dans la fréquence de l'émission).

Exposé de l'invention

Afin de résoudre ce problème, l'invention a pour objet une cavité microlaser selon la revendication 1.

Ainsi, il est possible de contrôler l'instant de déclenchement de la cavité, en ne mettant en oeuvre que des éléments dont la complexité est moindre que ceux mis en oeuvre dans le cas d'un microlaser à déclenchement actif. L'absorbant saturable est piloté, pour contrôler les départs d'impulsion microlaser.

Le système fonctionne alors de la manière suivante :

-   dans un premier temps, les pertes sont à un niveau élevé dans la cavité microlaser, car l'absorbant saturable est dans son état absorbant. Le gain monte dans le milieu amplificateur,
-   dans un deuxième temps, lorsqu'il est décidé de déclencher le microlaser, un signal de commande est envoyé sur l'absorbant saturable par le faisceau d'amorçage. La saturation de l'absorbant est amorcée, les pertes de la cavité sont légèrement diminuées et se retrouvent au niveau du gain de la cavité ; il en résulte la production d'une impulsion microlaser déclenchée.

Du point de vue temporel, ce nouveau dispositif présente tous les avantages associés à ceux du déclenchement actif :

-   précision du taux de récurrence,
-   contrôle des instants de départ des impulsions laser,
-   possibilité de synchronisation au sein d'un système.

Le signal de commande de l'impulsion laser est de faible puissance : il suffit d'introduire une impulsion lumineuse du faisceau d'amorçage dans l'absorbant saturable, et le gain du milieu laser fait le reste pour saturer complètement cet absorbant saturable. Par conséquent, la puissance à injecter pour amorcer le déclenchement est faible, notamment lorsqu'on la compare avec la nécessité d'imposer une tension de plusieurs centaines de volts (et jusqu'à 1000 volts) dans le cas du microlaser déclenché activement. Par ailleurs, il est beaucoup plus économique de disposer une source d'amorçage annexe que d'avoir à mettre au point une source de haute tension pour un milieu de petites dimensions.

Un autre aspect de l'invention concerne la disposition relative de l'absorbant saturable et du milieu actif, à l'intérieur de la cavité microlaser.

D'une façon générale, dans les lasers connus déclenchés passivement à l'aide d'un absorbant saturable, les arrangements suivants ont été proposés pour l'intérieur de la cavité laser.

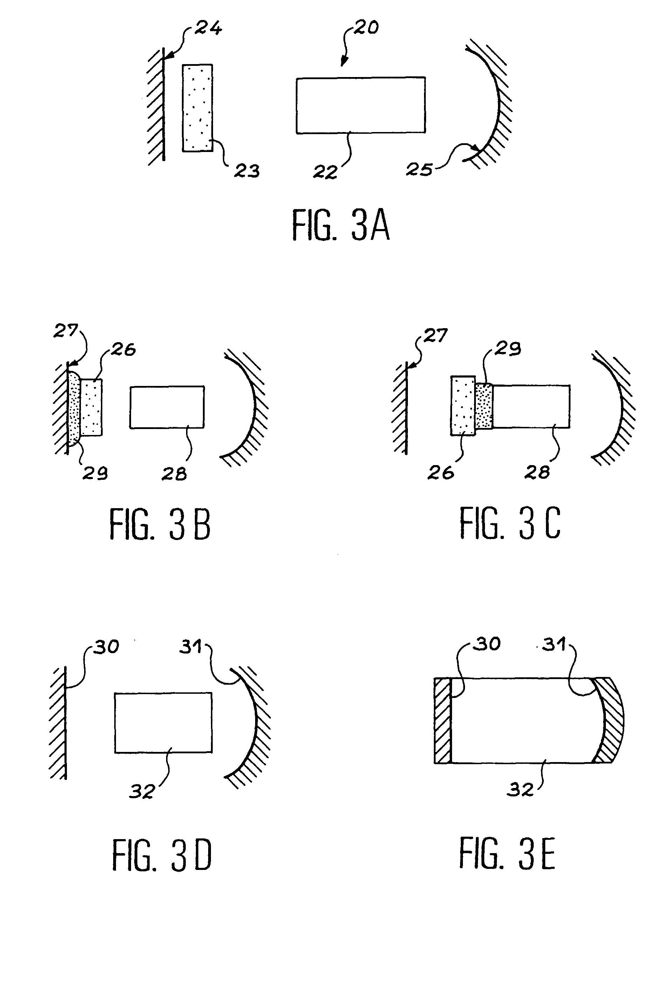

1- Un premier arrangement est illustré sur la figure 3A où la référence 20 représente une cavité laser, et les références 22, 23, 24, 25 désignent respectivement le matériau actif laser, l'absorbant saturable et les miroirs d'entrée et de sortie de la cavité.

Il n'y a aucun contact entre l'absorbant saturable 23, d'une part, et les autres éléments de la cavité 20, d'autre part.

Dans ce type de dispositif, il est nécessaire d'aligner optiquement les éléments de la cavité. En outre, des réglages optiques peuvent être nécessaires au cours de l'utilisation du laser.

2- Dans les arrangements schématisés sur les figures 3B et 3C, un contact est assuré entre l'absorbant saturable 26 et un miroir 27 (figure 3B) ou le matériau actif laser 28 (figure 3C) à l'aide d'une colle optique 29.

Mais la colle introduit un facteur d'absorption résiduelle ainsi que des différences d'indices à l'interface colle-matériaux collés. De plus, un éventuel défaut de parallélisme entre les éléments collés peut être lui-aussi source de pertes dans la cavité laser.

3- Les figures 3D et 3E illustrent une troisième disposition possible. Les références 30, 31 désignent les miroirs d'entrée et de sortie de la cavité laser. La référence 32 y représente le matériau actif laser, mais celui-ci est codopé avec les ions actifs laser et les ions d'absorbant saturable. Le même milieu sert alors de milieu actif et de milieu absorbant saturable. Il est donc impossible de régler indépendamment les propriétés du matériau laser et de l'absorbant saturable.

Or, l'épaisseur du milieu influe à la fois sur l'absorption de l'absorbant saturable et sur l'absorption des ions actifs laser, ainsi que sur la structure de modes du laser.

D'autre part, les coefficients d'absorption des ions actifs laser et absorbants saturables sont directement liés aux concentrations de ces ions, qui sont fixées définitivement lors de la croissance des cristaux et ne peuvent être modifiées par la suite. Pour chaque configuration laser, il faut donc refaire un nouveau cristal.

Enfin, dans le cas des lasers à déclenchement passif où le même ion (par exemple Er) est utilisé à la fois pour l'action laser et comme absorbant saturable, il est impossible d'utiliser cette méthode de codopage. En effet, le même ion pourra servir comme ion actif ou comme ion absorbant saturable à condition que les concentrations soient très différentes. Pour l'absorbant saturable, la concentration doit être beaucoup plus élevée que pour le matériau actif laser.

Pour remédier aux problèmes ci-dessus, l'invention propose de déposer l'absorbant saturable sous la forme d'une couche mince, directement sur le matériau actif de la cavité microlaser.

Un des avantages principaux de l'invention, selon ce mode particulier de réalisation, est dans la structure de la cavité microlaser (ou du microsystème laser consistant en un microlaser associé à de la micro-optique) déclenchée, qui consiste alors en un empilement de couches, permettant de garder la possibilité d'une fabrication collective à bas coût. Cette structure multicouches ne remet pas en cause la simplicité et les procédés de fabrication collective, donc à faible coût, des microlasers, tels qu'ils ont été développés pour les microlasers continus. Elle permet de réaliser des microlasers déclenchés passivement, monolithiques, autoalignés (sans aucun réglage optique) et indéréglables. Cette structure ne nécessite aucune opération de collage ni aucune opération complexe d'alignement.

Un autre avantage du microlaser par rapport au laser "codopé" est qu'on sépare le milieu actif de l'absorbant saturable, mais qu'on évite le collage des deux milieux tout en gardant une structure monolithique. Ainsi, on peut :

- d'une part régler indépendamment les épaisseurs (pendant le dépôt des couches ou par amincissement mécanique après le dépôt des couches) et les concentrations des ions dans les deux milieux,
- d'autre part, grâce à cette séparation, réaliser des lasers déclenchés où le même ion (par exemple Er) peut être utilisé comme ion actif et comme absorbant saturable, avec des concentrations différentes.

Selon un autre mode de réalisation particulier de l'invention, les moyens d'introduction du faisceau d'amorçage sont disposés de manière à permettre une propagation guidée du faisceau d'amorçage dans le plan de la couche mince d'absorbant saturable.

Ainsi, l'absorbant saturable peut présenter une microsurface gravée de façon à permettre une propagation guidée du faisceau d'amorçage dans le plan de la couche mince d'absorbant saturable, après introduction de ce faisceau dans la cavité microlaser et réflexion de ce même faisceau contre cette microsurface.

Selon encore un autre mode de réalisation de l'invention, les moyens aptes à permettre l'introduction d'un faisceau d'amorçage sont disposés de manière à ce que ce faisceau se propage, dans la cavité microlaser, suivant une direction non contenue dans le plan de la couche d'absorbant saturable.

Plus précisément, selon ce dernier mode de réalisation, les moyens aptes à permettre l'introduction du faisceau d'amorçage comportent une portion de microlentille hors d'axe disposée du côté du miroir d'entrée de la cavité microlaser.

Selon un autre aspect de l'invention, la couche mince peut être composée d'un colorant organique en solution dans un solvant polymère. Selon une variante, la couche mince est susceptible d'avoir été déposée par épitaxie en phase liquide.

Enfin, l'invention a également pour objet un microlaser comportant une cavité microlaser telle que celle décrite ci-dessus, des moyens de pompage de la cavité et des moyens pour générer un faisceau d'amorçage de la saturation de l'absorbant saturable.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1, déjà décrite, représente schématiquement un microlaser selon l'art antérieur, déclenché activement,
- la figure 2 représente la réflectivité de la deuxième cavité vue par le milieu actif laser de la première cavité dans un microlaser déclenché activement selon l'art antérieur,
- les figures 3A à 3E, déjà décrites, représentent schématiquement diverses dispositions possibles d'une cavité laser, selon l'art antérieur,
- les figures 4A et 4B représentent une cavité microlaser avec une couche mince d'absorbant saturable, en mode plan-plan ou plan-concave,
- les figures 5 et 6 représentent des modes de réalisation particuliers d'un microlaser selon l'invention,
- les figures 7A et 7B représentent un autre mode de réalisation d'un microlaser qui n'est pas conforme à l'invention, avec injection du faisceau d'amorçage par fibre optique,
- les figures 8A et 8B illustrent le fonctionnement d'une cavité laser déclenchée passivement, d'une part selon l'art antérieur (figure 8A) et d'autre part dans le cas d'un microlaser selon la présente invention (figure 8B).

Exposé détaillé de modes de réalisation de l'invention

L'invention a d'abord pour objet, de façon générale, une cavité microlaser comportant un milieu actif solide, compris entre un miroir d'entrée et un miroir de sortie, ainsi qu'un absorbant saturable qui permet de déclencher le microlaser de manière passive. En outre, des moyens sont prévus pour permettre l'introduction d'un faisceau d'amorçage de la saturation de l'absorbant saturable.

Le faisceau d'amorçage peut être obtenu par exemple par une diode laser. Ce type de source laser est compact et parfaitement compatible avec la dimension réduite du microlaser. De plus, la puissance émise par une diode laser est très facilement modulable par l'intermédiaire du courant d'alimentation de la diode. Dans le cas de l'application envisagée (amorçage d'un absorbant saturable) on veillera de préférence à ce que la diode satisfasse à des conditions de longueur d'onde et de puissance :

- longueur d'onde : la source d'amorçage excite de préférence l'absorbant saturable sur la même transition que le fait le faisceau laser. L'absorption de ce dernier est dû à cette transition et c'est donc bien elle qu'il faut saturer. Il est donc possible d'utiliser une longueur d'onde égale à la longueur d'onde laser ou bien une longueur d'onde plus courte, correspondant à des photons plus énergétiques. Dans ce dernier cas, on veillera de préférence à ce que les centres excités se désexcitent de façon à retomber sur le bon niveau d'énergie (dans le cas d'une répartition discrète des niveaux d'énergie) ou bien à ce que la longueur d'onde choisie reste dans la limite de la bande d'absorption (dans le cas d'une bande d'absorption dans le milieu absorbant saturable). Dans l'exemple d'un absorbant saturable dont les impuretés sont constituées par des ions $Cr^{4+}$, une diode émettant à 980 nanomètres convient pour obtenir un faisceau d'amorçage.

- puissance émise : en fait, seule une faible quantité de puissance est nécessaire pour amorcer l'absorption de l'absorbant saturable. Si l'on considère que le trajet dans le milieu laser et dans l'absorbant saturable est court, et que les pertes sur la puissance du faisceau d'amorçage sont limitées, il suffit de disposer d'une source d'amorçage ayant une puissance de l'ordre de quelques dizaines de milliwatts (entre environ 10 et 100mW). Cet ordre de grandeur est tout à fait compatible avec des diodes de faible puissance, disponibles commercialement, telles que les diodes à semi-conducteur III-V, qui sont en outre d'un faible coût. Si l'on a recours à ce type de diodes, l'ajustement en longueur d'onde est possible en ajustant les matériaux semiconducteurs III-V utilisés dans la diode laser : ces procédés d'ajustement sont connus par ailleurs de l'homme de l'art et ne seront pas détaillés de manière plus précise ; on peut également se reporter à l'article de Pocholle, dans SPECTRA 2000, N°164, Avril 1992, p. 27.

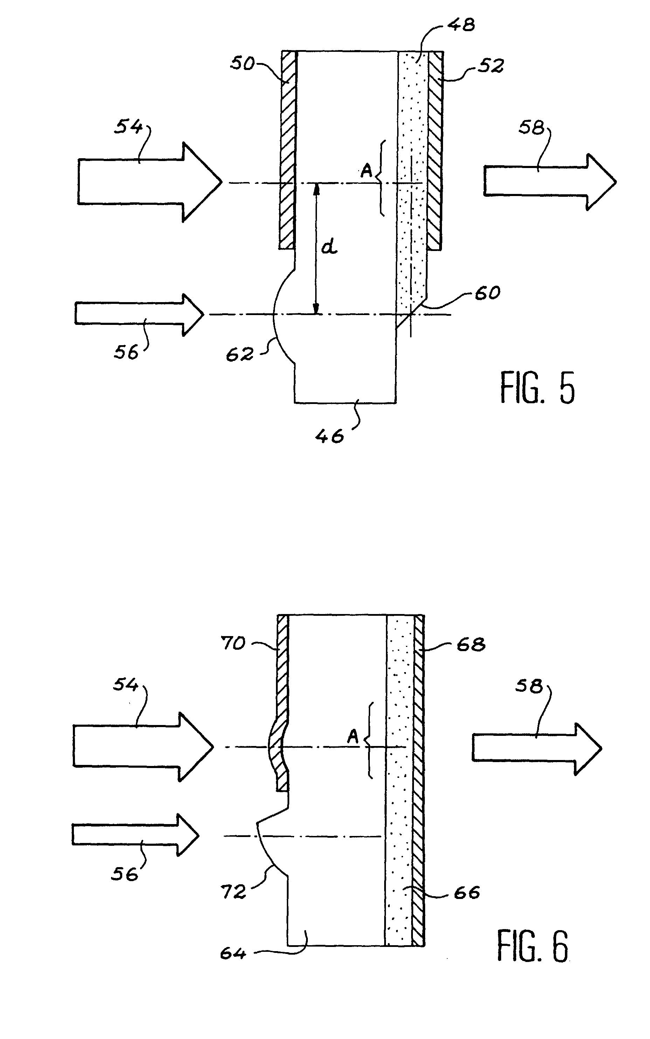

L'invention va maintenant être décrite dans le cas où l'absorbant saturable se présente sous la forme d'une couche mince. En particulier, il peut être avantageux de déposer la couche mince d'absorbant saturable directement sur le milieu amplificateur, comme illustré sur les figures 4A et 4B. Sur ces figures, la référence 36 désigne le milieu actif laser, la référence 38 désigne une couche mince d'absorbant saturable, et ces deux éléments sont compris entre deux miroirs 42 et 44 qui ferment la cavité laser. La référence 40 désigne l'ensemble de la cavité.

De façon optionnelle et comme illustré sur la figure 4B, il est possible de fabriquer par une méthode connue selon l'art antérieur (A. Eda et Al., CLEO'92, paper CWG33, p. 282 (Conf. on Laser and Electro-optics, Anaheim, USA, May 1992)) un réseau de microlentilles 45 en un matériau transparent (silice, par exemple) sur la surface du matériau laser 36. Les dimensions typiques de ces microlentilles sont :

- diamètre de cent à quelques centaines de microns,
- rayons de courbure de quelques centaines de micromètres à quelques millimètres.

Ces microlentilles servent à réaliser des cavités "stables" (la cavité "plan-plan" n'est pas stable) du type plan-concave. Elles permettent également dans le cas d'un pompage optique, de focaliser le faisceau pompe.

Le matériau constitutif du milieu actif 36 sera par exemple dopé au néodyme (Nd), pour une émission laser autour de 1,06 µm. Ce matériau pourra être choisi, par exemple, parmi l'un des matériaux suivants : YAG ($Y_3Al_5O_{12}$), LMA ($LaMgAl_{11}O_{19}$), $YVO_4$, YSO ($Y_2SiO_5$), YLF ($YLiF_4$), $GdVO_4$, ou SYS ($SrY_4(SiO_4)_3O$), etc. Ce choix sera conditionné par les critères suivants, mais dépendra également des applications :

- si la cavité laser est pompée optiquement, de préférence avec une ou plusieurs diodes lasers, le matériau doit avoir un fort coefficient d'absorption à la longueur d'onde de la pompe (par exemple, diode laser III-V émettant autour de 800 nm) pour augmenter l'efficacité de pompage, tout en gardant une épaisseur de matériau faible (<1mm).
- une large bande d'absorption à la longueur d'onde de la pompe, par exemple vers 800 nm, pour répondre au problème de la stabilisation en longueur d'onde de la diode laser, et simplifier ainsi le choix et la commande électrique de la diode laser de pompe,
- une forte section efficace d'émission stimulée, pour obtenir des puissances de sortie élevées et de forts rendements,
- une faible largeur de la bande d'émission pour obtenir aisément un laser monofréquence. Ou bien au contraire, une large bande d'émission, pour réaliser une émission laser accordable en fréquence,
- de bonnes propriétés thermomécaniques, pour simplifier l'usinage du matériau et pour limiter les effets thermiques néfastes par une bonne évacuation de la chaleur produite par l'absorption de la pompe (cette chaleur en excès dépendra du rendement énergétique du laser),
- une durée de vie longue dans l'état excité pour un stockage d'énergie important. Ou bien durée de vie courte pour une cadence de déclenchement rapide,
- de grandes dimensions pour pouvoir fabriquer simultanément en fabrication collective, le plus grand nombre de microlasers avec un cristal laser.

Parmi les matériaux connus, ceux qui sont les plus adaptés au fonctionnement du microlaser sont (avec des durées de vie comparables de quelques centaines de microsecondes) :

- $YVO_4$, qui présente un bon coefficient et une large bande d'absorption ainsi qu'une bonne section efficace,
- YAG, dont le coefficient d'absorption et la section efficace d'émission stimulée sont moyens et dont les largeurs de bandes d'absorption et d'émission sont faibles. Il se présente sous de grandes dimensions et a une bonne conductivité thermique,
- LMA : ce matériau offre un coefficient d'absorption et une section efficace faibles. Les bandes d'absorption et d'émission sont larges. Il peut en outre présenter de grandes dimensions.

Quant aux ions actifs (dopants), ils sont, en général choisis parmi :

- Nd pour une émission autour de 1,06 µm,
- Er ou un codopage erbium-ytterbium Er+Yb pour une émission autour de 1,5 µm,
- Tm ou Ho ou un codopage de thulium et d'holmium pour une émission autour de 2 µm.

Un autre paramètre décisif est l'épaisseur $\underline{e}$ du milieu actif 36.

L'épaisseur $\underline{e}$ conditionne les caractéristiques du microlaser :

- d'une part, l'absorption du faisceau pompe sera d'autant plus forte que l'épaisseur e sera grande ;
- d'autre part, le nombre de modes longitudinaux d'une cavité Fabry-Pérot augmente avec l'épaisseur et, si on veut réaliser un laser monomode longitudinal, cette épaisseur doit être faible.

Si dg est la largeur de la bande de gain (d'émission laser) du matériau, le nombre de modes N sera donné par :

$$N = dg/dv, \text{ et } dv = \frac{C}{2nL} ,$$

où C est la vitesse de la lumière et n l'indice de réfraction du matériau.

Pour un laser monofréquence, on choisit en général l'épaisseur minimum pour N=1, à condition que cette épaisseur soit >100 µm. Les épaisseurs typiques pour obtenir un seul mode sont :

- YAG L = 750 µm,
- $YVO_4$ L = 500 µm,
- LMA L = 150 µm.

En pratique l'épaisseur $\underline{e}$ variera donc entre 100 µm et 5 mm.

Dans les modes de réalisation illustrés sur les figures 4A et 4B, l'absorbant saturable 38 se présente sous la forme d'une couche mince. Deux types de couches minces peuvent être utilisés :

- un polymère contenant les molécules d'absorbant saturable. Typiquement pour un microlaser à 1,06 µm, on pourra utiliser, en tant qu'absorbant saturable, un colorant organique comme le bis(4-diéthylaminodithiobenzyl)nickel (BDN, Kodak, CAS N°51449-18-4) dans une solution contenant, en masse, 6% de poly(méthylméthacrylate) (PMMA) dans du chlorobenzène.

Des variantes sont décrites plus loin, en liaison avec la description d'un procédé de préparation.

Ce type de solution sera déposé à la tournette, directement sur le matériau laser (voir plus loin pour le procédé de préparation). On réalise ainsi des couches minces ayant une épaisseur de l'ordre de 1 à 5 μm par exemple 2μm, 3μm, 4μm.

- un autre type de couches minces sera obtenu par épitaxie en phase liquide (EPL), directement sur le matériau laser ou par tout autre procédé permettant de réaliser le même dépôt (même matériau, même dopage, mêmes propriétés) : la couche mince sera donc, de façon plus générale, susceptible d'avoir été obtenue par EPL. Le procédé de préparation par EPL est décrit plus loin et permet d'obtenir, sur le substrat 36 constitué par le milieu actif solide une couche d'épaisseur comprise entre 1 μm et 500 μm (par exemple : 100μm, 200μm, 300μm, 400μm). Elle est constituée d'un matériau de base identique au matériau de base du milieu actif solide (par exemple YAG), mais elle est dopée avec des ions lui conférant des propriétés d'absorbant saturable, par exemple du $Cr^{4+}$ pour un laser à 1,06 μm ou du $Er^{3+}$ pour un laser autour de 1,5 μm ou du $Ho^{3+}$ pour un laser autour de 2μm.

En fait, on adapte le type de dopant au laser que l'on veut déclencher, afin que la couche épitaxiée présente une absorption saturable à la longueur d'onde d'émission de ce laser.

Par conséquent, dans ce cas, le matériau actif laser et la couche d'absorbant saturable sont de même structure cristalline et ne se différencient que par les différents dopants qui affectent les propriétés cristallines et optiques de ces deux milieux.

Les propriétés de la couche mince, dans l'un et l'autre cas, seront très différentes.

Ainsi, on définit pour chaque type de couche, le seuil de dommage. Au-delà d'une certaine densité de puissance présente dans la cavité laser, on peut détruire la couche mince d'absorbant saturable. Cette densité de puissance limite, appelée seuil de dommage sera plus faible dans le cas du polymère avec colorant organique que dans le cas de la couche mince déposée par EPL. Dans le premier cas, il faudra donc travailler avec des énergies dans la cavité plus faibles que dans le second cas.

D'autre part, dans un cas, la différence d'indice entre le matériau laser 8 et le polymère 12 introduit une interface optique entre les deux milieux. Dans l'autre cas, on ne peut faire l'EPL que sur le même matériau (par exemple YAG sur YAG, seul le dopage étant différent), ce qui limite l'étendue des applications mais permet d'ajuster l'indice de la couche épitaxiée à celle du milieu actif laser (qui sert de substrat d'épitaxie) et, donc, d'éviter la formation d'une interface optique entre les deux milieux.

Enfin, la nature de la couche mince influera sur la forme temporelle de l'émission ou train d'impulsions laser. Dans le cas du colorant organique en solution dans un polymère, le temps de déclin du colorant est très court (~1ns), alors que dans le cas de la couche épitaxiée les ions constituant les impuretés ($Cr^{4+}$, $Er^{3+}$, $Ho^{3+}$) ont des temps de déclin beaucoup plus long (de l'ordre de la microseconde ou plus). Ces propriétés conditionneront évidemment le choix de la couche mince en fonction de l'utilisation prévue.

Pour réaliser une cavité laser complète, le milieu actif avec sa (ou ses) couche(s) d'absorbant saturable sera compris entre deux miroirs 42, 44. Le miroir d'entrée, déposé par des procédés connus, sera de préférence un miroir de type dichroïque présentant une réflectivité maximum (la plus proche possible de 100%) à la longueur d'onde du laser et une transmission la plus élevée possible (>80%) à la longueur d'onde de la pompe (en général vers 800 nm pour les matériaux dopés Nd, vers 980 nm pour ceux dopés Er, et vers 780 nm pour ceux dopés Tm). Le miroir de sortie est alors également de type dichroïque mais laisse passer quelques pour cent du faisceau laser.

On obtient donc une cavité laser présentant une des structures représentées sur les figures 4A, 4B.

On voit immédiatement l'avantage d'une telle structure puisqu'elle ne nécessite, à aucun moment, d'alignement optique des différents composants, et qu'elle n'introduit aucune colle optique, tout en évitant les problèmes liés à une structure où le milieu actif est codopé avec les ions actifs lasers et les ions d'absorbant saturable.

Le pompage de ce type de cavité sera préférentiellement un pompage optique. Ainsi, les diodes laser III-V sont particulièrement bien adaptées pour pomper une cavité microlaser.

Un microlaser tel qu'il vient d'être décrit peut être, conformément à l'invention, déclenché de manière pilotée en amorçant la saturation de l'absorbant saturable, à l'aide d'un faisceau d'amorçage prévu à cet effet. Différentes variantes vont être décrites en liaison avec les figures 5, 6, 7A et 7B.

Sur la figure 5, la référence 46 désigne le milieu actif laser, la référence 48 une couche mince d'absorbant saturable, les références 50 et 52 les miroirs d'entrée et de sortie de la cavité microlaser. Un faisceau de pompage du milieu actif laser est représenté schématiquement par une flèche désignée par la référence 54, tandis que la référence 56 désigne un faisceau d'amorçage de la saturation de l'absorbant saturable 48. La configuration représentée sur la figure 5 est une configuration dite transverse, c'est-à-dire que le faisceau d'amorçage 56 se propage, dans la couche mince d'absorbant saturable, perpendiculairement à l'axe des faisceaux de pompage 54 de la cavité laser et du faisceau laser 58 émis par le microlaser. En fait, dans le cas d'un absorbant saturable se présentant sous forme de couche mince, cette configuration transverse est particulièrement avantageuse dans la mesure où la couche mince va jouer le rôle de guide pour le faisceau d'amorçage. Ce dernier va ainsi se propager jusqu'au niveau de la zone représentée par la lettre A sur la figure 5, c'est-à-dire de la zone où le faisceau laser, dans la cavité, rencontre l'absorbant saturable. De manière préférée, à l'intérieur de la couche d'absorbant saturable, il est souhaitable que la propagation du faisceau d'amorçage se fasse sur une distance d la plus courte possible, car ce dernier est absorbé tout le long de sa propagation dans la couche. La distance $\underline{d}$ est cependant déterminée par la taille des composants microoptiques utilisés pour injecter les faisceaux de pompage et d'amorçage dans la cavité microlaser.

Par ailleurs, l'indice de la couche d'absorbant saturable peut être adapté au mode de propagation guidée (codopage avec du gadolinium (Ga) et du lutécium (Lu), le premier servant à adapter l'indice, le second permettant de compenser l'élargissement de la maille du réseau cristallin consécutif à l'introduction du premier).

Dans ce mode de réalisation, afin d'injecter le faisceau d'amorçage 56 dans la cavité microlaser, on peut avoir recours aux techniques de la microoptique. Ainsi, la couche mince 48 peut être gravée de façon à obtenir une face 60, plane ou non plane, qui permet de réfléchir l'onde d'amorçage. L'inclinaison de cette surface gravée 60 est de préférence telle que l'on obtienne une réflexion totale de l'onde d'amorçage. S'il n'y a pas réflexion totale, il est possible, selon une variante, de réaliser un traitement réfléchissant de la surface 60.

Pour une couche mince d'absorbant saturable d'une épaisseur faible (approximativement inférieure à 10μm) la surface gravée peut être obtenue par technique de photolithographie et masque à densité variable. Pour des épaisseurs supérieures (supérieures à 10μm) un polissage en biseau pourra être réalisé pour obtenir cette surface 60.

Le faisceau d'amorçage 56 peut être focalisé dès son entrée dans le milieu laser, par exemple à l'aide d'une microlentille 62 gravée sur la face d'entrée du microlaser dans une zone voisine de l'axe du faisceau de pompe. Dans la configuration représentée sur la figure 5, le faisceau de pompage 54 du milieu laser et le faisceau d'amorçage 56 de l'absorbant saturable sont situés du même côté du microlaser.

La fonction de focalisation du faisceau d'amorçage 56 peut être par ailleurs obtenue par tout autre moyen, tel que par exemple lentille diffractive, lentille de Fresnel, etc.

Dans le mode de réalisation illustré sur la figure 6, les références 64, 66, 68, 70 désignent respectivement le milieu amplificateur laser, une couche mince d'absorbant saturable, les miroirs de sortie et d'entrée de la cavité microlaser. Les faisceaux de pompage, d'amorçage et le faisceau laser sont désignés par des références identiques à celles de la figure 5.

Le mode de réalisation illustré sur la figure 6 peut être qualifié de quasi longitudinal, c'est-à-dire que le faisceau d'amorçage 56 se propage vers la couche mince d'absorbant saturable, suivant une direction non contenue dans le plan de cette couche. Ce mode de réalisation ne nécessite pas de graver la couche mince d'absorbant saturable, au contraire du mode de réalisation décrit ci-dessus en liaison avec la figure 5. Le faisceau d'amorçage peut être amené, là encore, parallèlement au faisceau de pompage 54, en direction de la face d'entrée de la cavité microlaser. Au niveau de cette face d'entrée, il est dévié vers la zone A de la couche d'absorbant saturable sur laquelle le faisceau de pompage est incident. La déviation peut être obtenue par une portion de microlentille hors d'axe 72, obtenue par gravure du milieu actif laser 64 à l'aide d'un masque à densité variable, dans une zone voisine de l'axe du faisceau de pompe.

Dans les cas décrits ci-dessus, les faisceaux d'amorçage 54 et de pompage 56 sont parallèles au faisceau laser 58 obtenu en sortie de cavité microlaser.

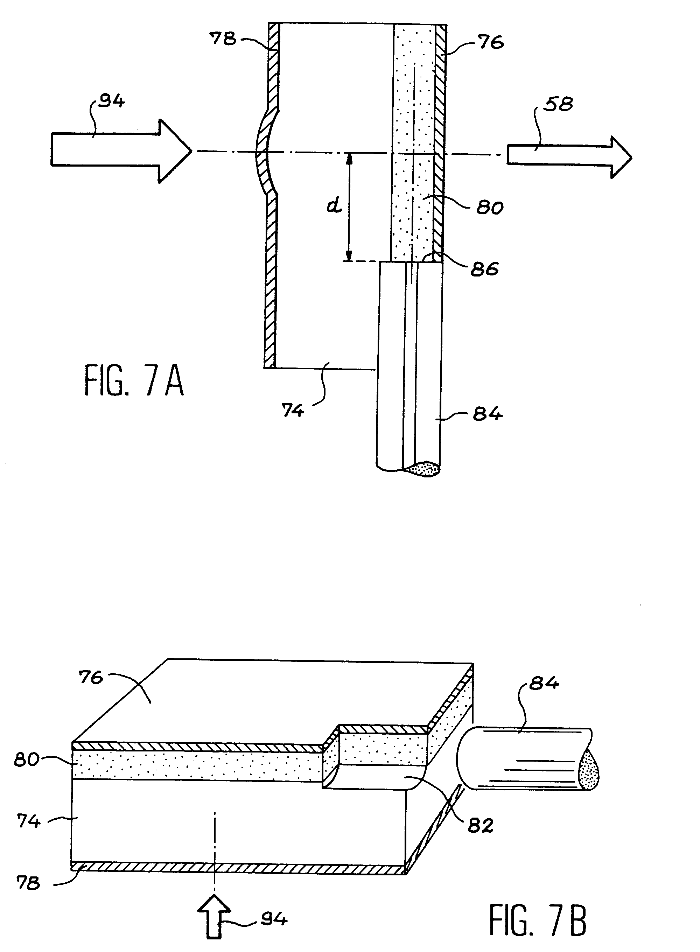

Un autre mode de réalisation qui n'est pas conforme à l'invention va maintenant être décrit, en liaison avec les figures 7A et 7B. Sur ces figures, une couche mince d'absorbant saturable est désignée par la référence 80. Elle est déposée sur un milieu amplificateur 74, l'ensemble étant compris entre deux miroirs d'entrée 78 et de sortie 76 de la cavité microlaser ainsi obtenue. Une rainure ou échancrure 82 est pratiquée dans au moins une partie de l'absorbant saturable, et éventuellement, comme illustré sur les figures 7A et 7B, dans le miroir de sortie et dans une partie du milieu amplificateur, de façon à pouvoir positionner l'extrémité d'une fibre optique 84 qui permettra d'injecter le faisceau d'amorçage de l'absorbant saturable 80, directement dans ce dernier, sans le faire passer par le milieu amplificateur. Là encore, la géométrie obtenue peut être qualifiée de transverse, et le faisceau d'amorçage se propage dans la couche mince 80 qui lui sert de guide. Un autre avantage de cette configuration est qu'elle permet également de réduire la distance d sur laquelle le faisceau d'amorçage va se propager dans la couche mince 80, entre l'extrémité de sortie 86 de la fibre 84 et la zone de l'absorbant saturable 80 sur laquelle le faisceau de pompage 54 est incident.

La taille de la rainure 82 est fonction du diamètre de la fibre d'amorçage 84. Cette dernière peut être une fibre multimode. Ce peut être aussi une fibre monomode, puisque, ainsi qu'on l'a déjà expliqué ci-dessus, la puissance qui doit être transmise à l'absorbant saturable est relativement faible (de l'ordre de quelques dizaines de milliwatts). Le choix d'une fibre monomode permet par ailleurs de minimiser l'encombrement, puisqu'elle est d'un diamètre plus faible qu'une fibre multimode. Par ailleurs, dans le cas de couches minces d'absorbant saturable ayant une épaisseur de l'ordre de quelques micromètres, une fibre monomode sera également bien adaptée, toujours du fait de son faible diamètre de coeur.

Pour tous les modes de réalisation décrits ci-dessus, et en ce qui concerne le choix de la source qui délivre le faisceau d'amorçage 56, les conditions à respecter pour la longueur d'onde et la puissance sont de préférence les mêmes que celles qui ont déjà été décrites ci-dessus. Par conséquent, là encore, une diode à semi-conducteur III-V dont les propriétés spectrales d'émission sont ajustées par le choix du matériau semi-conducteur, peut également convenir pour les différents modes de réalisation décrits.

De plus, et toujours pour tous les modes de réalisation qui ont été décrits ci-dessus, il est clair que la présence de moyens aptes à permettre l'introduction d'un faisceau d'amorçage de la saturation de l'absorbant saturable ne remet absolument pas en cause le caractère compact de la structure du microlaser. Par ailleurs, aucun élément n'est introduit dans la cavité microlaser, qui nécessite un réglage optique de celle-ci. Enfin, aucun élément parasite du type colle optique n'est nécessaire ; en particulier, le bénéfice de la structure d'absorbant saturable sous forme de couche mince directement déposée sur le milieu actif laser est sauvegardé.

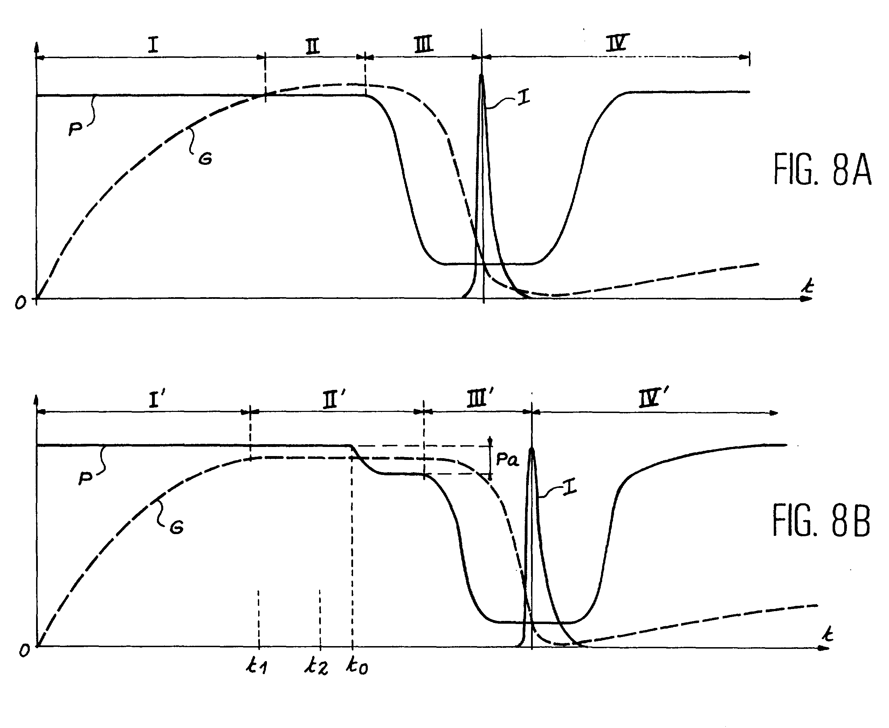

Le fonctionnement d'un dispositif conforme à la présente invention va maintenant être décrit, en liaison avec les figures 8A et 8B. Sur ces figures, sont représentées les évolutions temporelles et les différents régimes des niveaux de perte et de gain d'une cavité microlaser, ainsi qu'une impulsion laser obtenue par déclenchement de la cavité.

Le schéma de la figure 8A correspond au cas où la cavité microlaser est de type classique, c'est-à-dire sans moyen pour amorcer la saturation de l'absorbant saturable. Sur cette figure, on distingue d'abord une phase I dans laquelle le système ne présente pas d'effet laser car l'absorbant saturable impose à l'intérieur de la microcavité un niveau de perte P supérieur au gain G obtenu par pompage. Cependant, ce gain augmente, car le milieu amplificateur solide stocke l'énergie du faisceau de pompage (avec un effet de saturation dû à la réémission de l'énergie par fluorescence). A partir d'une certaine valeur de puissance de pompage stockée, le gain G atteint et dépasse le niveau de perte total de la cavité (perte résiduelle + transmission de sortie + perte élevée de l'absorbant saturable) : c'est la phase II (voir figure 8A). Au cours de cette phase II, les quelques photons émis par fluorescence à la longueur d'onde laser commencent à être amplifiés par le milieu laser fortement pompé, malgré des pertes encore élevées. Puis, au début de la phase III, l'absorbant se sature jusqu'à devenir transparent et l'impulsion laser I est émise. Ce phénomène est très rapide, l'absorbant se saturant brutalement sous l'avalanche des photons amplifiés dans le milieu amplificateur laser. Les pertes basculent à leur plus bas niveau, alors que le gain est resté à un niveau important : une impulsion laser est émise. En fait, le gain va diminuer très rapidement, jusqu'en dessous du seuil imposé par le niveau de perte P. Ensuite (phase IV), l'absorbant saturable revient à son état de départ, car ses centres actifs se désexcitent de façon diverse (par émission spontanée de photons, de phonons, ...) et le modulateur constitué par l'absorbant saturable se referme.

Dans le cas d'une cavité microlaser selon la présente invention, l'évolution temporelle de ces mêmes quantités (perte P, gain G, impulsion laser I) est représentée sur la figure 8B. Dans une première phase I', le niveau de perte P est supérieur au gain G à l'intérieur de la cavité microlaser, ce niveau de gain étant cependant fonction croissante du temps. Le niveau de perte P maximum est fixé par l'absorbant saturable (composition, épaisseur, caractéristiques spectrales), tandis que le niveau de gain G est déterminé par l'intensité du faisceau de pompage de la cavité microlaser. En fait, ce niveau de pompage sera réglé de façon à ce que le gain n'atteigne pas le niveau de perte P (sinon l'absorbant saturable entre dans la phase II selon le schéma de la figure 8A classique). L'introduction du faisceau d'amorçage, à un instant $t_0$ (par exemple à l'aide de moyens de synchronisation de la source de pompage de la cavité laser et de la source de faisceau d'amorçage), correspond à l'introduction d'une puissance $P_a$, sous forme lumineuse, dans l'absorbant saturable, cette puissance étant suffisante pour amener le niveau de pertes P à l'intérieur de la cavité sous le niveau de gain. Dès que la saturation de l'absorbant saturable est ainsi amorcée, elle se précipite pour faire diminuer rapidement le niveau de perte (phase III' sur la figure 8B) qui devient ainsi nettement inférieur au niveau du gain, et une impulsion laser I est émise. Enfin, dans la phase IV', le niveau de gain diminue rapidement jusqu'en dessous du seuil imposé par les pertes, et l'absorbant saturable revient à son état de départ, ses centres actifs se désexcitant : un cycle peut ainsi recommencer. L'instant auquel le faisceau d'amorçage est déclenché peut être choisi par l'utilisateur : ainsi, sur la figure 8B, il peut être choisi en $t_1$ ou en $t_2$ comme en $t_0$.

Par la comparaison de ces deux schémas, il est possible de considérer l'absorbant saturable comme un modulateur de perte commandé :

- dans le schéma classique (figure 8A), par une source lumineuse interne à la microcavité laser. Cette dernière est fortement bruitée et ce niveau élevé du bruit entraîne l'indétermination sur l'instant de déclenchement de la microcavité,

- dans le schéma conforme à la présente invention (figure 8B), par une source d'amorçage externe, qui permet de s'affranchir du caractère aléatoire inhérent au schéma de fonctionnement classique.

Un procédé de fabrication d'un microlaser selon la présente invention va maintenant être décrit.

On peut distinguer, dans un tel procédé, les étapes suivantes :

1) - La première étape consiste à choisir le matériau actif laser et à conditionner le cristal laser choisi : ce dernier est orienté et découpé en lames d'épaisseur comprise entre 0,5 et 5 mm.

2) - L'étape suivante est une étape de rodage et de polissage des lames, et a pour objectif d'enlever la couche d'écrouissage superficielle due à la découpe, et de ramener l'épaisseur des lames à une épaisseur légèrement supérieure à la spécification du microlaser.

Les lames rodées et rapprochées de l'épaisseur finale <u>e</u> sont polies sur les deux faces avec une qualité optique.

La découpe, le rodage et le polissage sont faits avec des procédés connus, en utilisant des machines connues de l'homme du métier.

3) - Une étape de préparation de l'absorbant saturable.

3a) Dans le cas d'un absorbant saturable classique, divers procédés sont connus, qui permettent de réaliser une cavité microlaser déclenchée. En particulier, il est possible de réaliser un codopage du matériau de base du milieu actif laser, afin de lui conférer des propriétés de milieu actif laser et d'absorbant saturable (par exemple, YAG dopé avec des ions néodyme $Nd^{3+}$ et chrome $Cr^{4+}$).

3b) Dans le cas d'un absorbant saturable déposé sous forme de couche mince, deux types de dépôt peuvent être réalisés :

3b1) - <u>1er type de dépôt : dépôt d'un colorant organique absorbant saturable, en solution dans un polymère.</u>

Typiquement, pour un microlaser fonctionnant à 1,06 μm, on peut utiliser, comme absorbant saturable un colorant organique comme le bis(4-diéthylaminodithiobenzyl) nickel (BDN, Kodak, CAS N° 51449-18-4) dans une solution de poly (méthylméthacrylate) (PMMA).

Pour cela, on prépare une solution contenant en masse 6% de poly(méthylméthacrylate) (PMMA, masses moyennes Polyscience) dans du chlorobenzène (Prolabo) en agitant 24 heures. On y rajoute 0,2% en masse de BDN et on agite encore 2 heures. La solution est ensuite filtrée et déposée sur le substrat, sur la face de sortie (opposée à la face d'entrée qui comporte le miroir dichroïque) au goutte à goutte avec un mouvement circulaire centrifuge. On peut utiliser pour ce dépôt à la "tournette" une machine standard telle que celle utilisée en microélectronique pour le dépôt des résines servant aux opérations de lithogravure. Le substrat est préalablement nettoyé de toutes les traces d'impuretés résultant du polissage. Il est mis en rotation (tournette) pendant 20 secondes à 2000 tours/minute, puis pendant 30 secondes à 5000 tours/minute. La couche est enfin mise à sécher 2 heures dans un four à 70°C.

On obtient ainsi un film de 1 μm d'épaisseur contenant 3% de molécules actives (BDN) et dont la densité optique est de 0,13 à 1,06 μm (74% de transmission) avant saturation. Un tel absorbant saturable a un temps de relaxation voisin de 10 ns et sature à une intensité voisine de 1 MW/cm$^2$.

En variant les paramètres de concentration du polymère, sa masse moléculaire ou son solvant, la proportion de colorant ainsi que la vitesse de rotation de la tournette, on peut ajuster les performances de l'absorbant saturable. Les spécifications obtenues typiquement sont :

- épaisseur du film : 1 à 5 μm (par exemple 2μm, 3μm, 4μm),
- densité de molécules        : 5 à 10% en masse,
- colorant         : BDN, mm=685g,
- transition vitreuse          : Tg=78°C,
- absorption à 1,06 μm       : 10 à 70%,
- taux de saturation :        90%,
- section efficace      : $10^{-16}$cm$^2$,
- temps de relaxation       : 2 à 15 ns,
- intensité de saturation        : 0,1 à 1 MW/cm$^2$,
- non-uniformité du film        : <5% sur 1cm$^2$,
- taux de dépolarisation        : $<10^{-5}$,
- pertes à 800 nm        : <1%,
- fréquence de récurrence        : 10-10000 Hz,
- photostabilité        : $10^8$ coups,
- technique de dépôt        : tournette.

D'autres polymères tels que le poly(vinylalcool) ou le poly(vinylacétate) ou encore poly(styrène) peuvent être employés dans leurs solvants respectifs) à la place du PMMA. On peut aussi utiliser le bis (4-diméthylaminodithiobenzyl)        nickel (BDN, Kodak, CAS N°38465-55-3) comme colorant.

Le colorant peut aussi être incorporé dans un gel de silice ou bien greffé à même la chaîne de polymère.

De nombreux autres complexes métalliques de dithiene peuvent servir de colorant pour d'autres longueurs d'onde, comme décrit dans les articles de K.H. Drexhage et al., Optics Communication 10 (1), 19(1974) et de Mueller-Westerhoff, Mol. Cryst. Liq. Cryst. 183, 291 (1990).

La technique peut aussi être employée pour le déclenchement de lasers fonctionnant à d'autres longueurs d'ondes que 1,06 µm. On déclenchera par exemple des lasers à Er ou Er+Yb (matériaux dopé Er ou Er+Yb où l'ion actif est Er) émettant autour de 1,5 µm avec du tétraéthyloctahydrotétraazapentaphène-dithiolato-nickel (voir article de Mueller-Westerhoff cité ci-dessus).

3b2) - 2ème type de dépôt : dépôt d'une couche mince par épitaxie en phase liquide (EPL).

La couche A.S. (absorbant saturable) est obtenue par trempe du substrat, sur lequel on la dépose, dans une solution sursaturée convenablement choisie. Cette solution, ou bain d'épitaxie est un mélange d'un solvant et d'un soluté constitué de différents éléments formant le matériau final. Le substrat et la couche sont de même structure cristalline et ne se différencient que par les différents dopants qui affectent les propriétés cristallines et optiques de la couche. Les ions actifs tels Nd, Er, Yb rendent le matériau amplificateur, d'autres ions (Cr, Er) lui confèrent des propriétés d'A.S. et certains autres peuvent être utilisés pour faire varier l'indice de réfraction ou la maille cristalline du matériau (par exemple Ga, Ge, Lu, ...). Il est ainsi possible de contrôler les propriétés des couches réalisées.

Ce procédé peut s'appliquer à tout matériau existant sous forme de monocristaux (pour la réalisation des substrats) et pouvant être préparés par épitaxie en phase liquide. C'est le cas des matériaux cités plus haut pour le matériau de base du milieu actif laser : $Y_3A_{15}O_{12}$ (YAG), $Y_2SiO_5$ (YSO), $YVO_4$, $YLiF_4$ (YLF) ou $GdVO_4$ ou $SrY_4(SiO_4)_3$ (SY). La composition du bain (choix du solvant et des substituants), les concentrations dans le soluté des différents oxydes et les conditions expérimentales de croissance (gamme de températures, mode opératoire, ...) sont ajustées pour chaque matériau afin d'obtenir des couches présentant la meilleure qualité cristalline possible.

Dans le cas des grenats (YAG), le solvant choisi est un mélange $PbO/B_2O_3$ et le soluté comprend un excès de $Al_2O_3$ afin de stabiliser la phase grenat. Le rapport soluté/solvant est alors calculé de façon à obtenir une croissance vers 1000°C.

En fonction de la composition du bain, de la température et du temps de dépôt, on peut ajuster l'épaisseur ($1 \leq e \leq 200$ µm, par exemple : 25µm, 50µm, 75µm, 100µm, 125pm, ls0µm, 175µm ; il est possible également de réaliser $e \geq 200$µm) et la concentration en dopants dans les couches. La croissance d'une couche a lieu à température constante, ce qui permet d'obtenir une concentration en dopant homogène dans l'épaisseur de la couche. Le substrat est animé d'un mouvement de rotation uniforme ou alternée, ce qui permet une bonne homogénéité d'épaisseur.

On peut réaliser un substrat portant une ou deux couches d'A.S. suivant que l'on trempe une face du matériau actif laser dans le bain, en surface de celui-ci, ou les deux faces, le matériau laser étant totalement immergé dans le bain.

La (ou les) face(s) épitaxiée(s) obtenue(s) peu(ven)t être repolie(s) afin d'enlever une rugosité provoquée éventuellement par le procédé d'épitaxie et d'amener l'épaisseur de la (ou des) couche(s) épitaxiée(s) à l'épaisseur voulue pour le fonctionnement du microlaser.

4) - Une étape de dépôt des miroirs d'entrée et de sortie. Il peut s'agir de miroirs dichroïques, obtenus par un dépôt de multicouches diélectriques, procédé connu lui aussi de l'homme du métier et commercialement disponible.

Le dépôt du miroir d'entrée peut être réalisé avant ou après l'étape précédente, dans le cas du dépôt de polymère A.S., mais elle doit être réalisée après dans le cas de l'épitaxie en phase liquide qui a lieu à haute température et risque de détruire le miroir.

5) - Une étape de découpe des lames pour obtenir des puces microlasers.

Les plaquettes comportant les miroirs, l'absorbant saturable et le milieu actif laser et éventuellement les microlentilles sont découpées par une scie diamantée (de type celle qui sont utilisées en microélectronique pour la découpe des puces Si), pour obtenir les puces laser 1 de quelques mm$^2$ de section.

6) - Les étapes spécifiques des modes de réalisation illustrés sur les figures 5, 6 ont déjà été exposés ci-dessus (gravure de la couche mince 80 pour former la surface réfléchissante 60 ; formation des microlentilles 62, 72). Par ailleurs, la formation de la rainure 82 dans le cas du mode de réalisation qui n'est pas conforme à l'invention et illustré sur les figures 7A, 7B est obtenue par technique classique de gravure.

La source microlaser selon la présente invention présente tous les avantages du microlaser, toutes les caractéristiques des lasers impulsionnels à déclenchement actif et tous les avantages des lasers impulsionnels à déclenchement passif.

De plus, elle peut être réalisée par des méthodes de fabrication collective. Ceci a pour conséquence :

-   un coût de fabrication réduit car on fabrique les échantillons par lots,
-   une bonne fiabilité de chaque laser produit au sein d'un lot,
-   une absence de réglage et une maintenance très réduite du laser.

Le procédé de fabrication bénéficie largement des procédés mis au point pour les microlasers à déclenchement passif. De même, la structure du microlaser reste très simple, très fiable et très robuste.

Le fonctionnement temporel est analogue à celui du déclenchement actif, c'est-à-dire avec les avantages suivants :

-   précision du taux de récurrence,
-   contrôle des instants de départ d'impulsion,
-   possibilité de synchronisation au sein d'un système.

Ce comportement temporel peut être modélisé et étudié.

Le signal de commande de l'impulsion laser est de faible puissance, il suffit d'amorcer la saturation de l'absorbant et le gain du milieu laser fait le reste pour saturer complètement l'absorbant.

Enfin, plus le signal de commande est fort et plus le bruit sur l'instant de départ sera faible. En effet, plus la saturation de l'absorbant est avancée, plus celle-ci est contrôlée par l'extérieur et non par les photons intérieurs à la cavité laser, qui sont une cause de bruit. Avec ce système de déclenchement, on peut trouver un compromis entre la précision des caractéristiques temporelles de l'émission et la consommation du système de déclenchement en énergie.

Parmi les applications industrielles possibles des microlasers, on peut notamment citer la télémétrie laser, le marquage et micro-usinage laser, la détection de polluants, l'imagerie tridimensionnelle.

En outre, le dispositif de déclenchement peut être adapté à une très grande plage de longueurs d'onde.

## Revendications

1.  Cavité microlaser monolithique comportant un milieu actif solide (46, 64,74), un miroir d'entrée (50, 70, 78), un miroir de sortie (52, 68, 76), un absorbant saturable (48, 66), et des moyens (60, 62 ; 72) aptes à permettre l'introduction, dans le milieu actif de la cavité, par la face d'entrée du microlaser où se trouve le miroir d'entrée (50, 70, 78) de la cavité, d'un faisceau d'amorçage (56) de la saturation de l'absorbant saturable, parallèlement à la direction d'introduction, dans le milieu actif solide, d'un faisceau de pompage (54) de ce milieu actif.

2.  Cavité microlaser selon la revendication 1, l'absorbant saturable se présentant sous la forme d'une couche mince (48, 66, 80) de matériau absorbant saturable, directement déposée sur le milieu actif solide (46, 64, 74).

3.  Cavité microlaser selon la revendication 2, les moyens (60, 62 ; 82) d'introduction du faisceau d'amorçage étant disposés de manière à permettre une propagation guidée du faisceau d'amorçage dans le plan de la couche mince d'absorbant saturable.

4.  Cavité microlaser selon la revendication 3, l'absorbant saturable présentant une microsurface gravée (60) de façon à permettre une propagation guidée du faisceau d'amorçage dans le plan de la couche mince d'absorbant saturable (48), après introduction du faisceau dans le microlaser et réflexion de ce faisceau contre la microsurface (60).

5.  Cavité microlaser selon la revendication 2, les moyens (72) aptes à permettre l'introduction d'un faisceau d'amorçage étant disposés de manière à permettre la propagation d'un tel faisceau suivant une direction non contenue dans le plan de la couche mince d'absorbant saturable.

6.  Cavité microlaser selon la revendication 5, les moyens (72) aptes à permettre l'introduction d'un faisceau d'amorçage comportant une portion de microlentille disposée du côté du miroir d'entrée (70) de la cavité microlaser.

7.  Cavité microlaser selon l'une des revendications 2 à 6, la couche mince (48, 66) étant composée d'un colorant organique en solution dans un solvant polymère.

8.  Cavité microlaser selon la revendication 7, le colorant organique étant choisi parmi le bis(4-diéthylaminodithiobenzyl)nickel ou le bis(4-diméthylaminodithiobenzyl)nickel, le solvant étant une solution de poly(méthyméthacrylate (PMMA), de poly(vinylalcool) ou de poly(vinyl acétate ou de poly(styrène).

9.  Cavité microlaser selon l'une des revendications 2 à 6, la couche mince (48, 66) étant susceptible d'avoir été déposée par épitaxie en phase liquide.

10. Cavité microlaser selon la revendication 9, la couche mince étant composée d'un matériau de base, identique à celui du milieu actif solide et dopé avec des ions $Cr^{4+}$ ou $Er^{3+}$ ou $Ho^{3+}$.

11. Microlaser comportant une cavité microlaser selon une des revendications précédentes, des moyens de pompage de la cavité, et des moyens pour générer un faisceau d'amorçage (56) de la saturation de l'absorbant saturable.

## Patentansprüche

1. Monolithischer Mikrolaserresonator mit einem aktiven Festkörpermedium (46, 64, 74), einem Eingangsspiegel (50, 70, 78), einem Ausgangsspiegel (52, 68, 76), einem sättigbaren Absorptionsmaterial (48, 66) und Einrichtungen (60, 62; 72), um in das aktive Medium des Resonators durch die Eingangsseite des Mikrolasers, wo sich der Eingangsspiegel (50, 70, 78) des Resonators befindet, einen Strahl (56) zum Auslösen bzw. Einleiten der Sättigung des sättigbaren Absorptionsmaterials einspeisen zu können, parallel zu der Einspeisungseinrichtung eines Strahls (54) in das aktive Festkörpermedium zum Pumpen dieses aktiven Mediums.

2. Mikrolaserresonator nach Anspruch 1, wobei das sättigbare Absorptionsmaterial sich in Form einer Dünnschicht (48, 66, 80) aus sättigbarem absorbierendem Material präsentiert, direkt auf dem aktiven Festkörpermedium (46, 64, 74) abgeschieden.

3. Mikrolaserresonator nach Anspruch 2, wobei die Einspeiseinrichtungen (60, 62; 82) des Strahls zum Auslösen bzw. Einleiten der Sättigung so angeordnet sind, daß sie eine geleitete Ausbreitung dieses Strahls in der Ebene der Dünnschicht aus sättigbarem Absorptionsmaterial ermöglichen.

4. Mikrolaserresonator nach Anspruch 3, wobei das sättigbare Absorptionsmaterial eine Mikrofläche (60) aufweist, die so geätzt ist, daß sie eine geleitete Ausbreitung des Einleit-bzw. Auslösstrahls in der Ebene der sättigbaren Absorptionsschicht (48) ermöglicht, nach Einspeisung des Strahls in den Mikrolaser und Reflexion dieses Strahls an der Mikrofläche (60).

5. Mikrolaserresonator nach Anspruch 2, wobei die die Einspeisungseinrichtungen (72) eines Auslös-bzw. Einleitstrahls so angeordnet sind, daß sie die Ausbreitung eines derartigen Strahls in einer Richtung ermöglichen, die nicht in der Ebene der sättigbaren Dünnschicht aus Absorptionsmaterial enthalten ist.

6. Mikrolaserresonator nach Anspruch 5, wobei die Einspeisungseinrichtungen (72) eines Auslös- bzw. Einleitstrahls einen Mikrolinsenteil umfassen, angeordnet auf der Seite des Eingangsspiegels (70) des Mikrolaserresonators.

7. Mikrolaserresonator nach einem der Ansprüche 2 bis 6, wobei die Dünnschicht (48, 66) durch einen in einem polymeren Lösungsmittel gelösten organischen Farbstoff gebildet wird.

8. Mikrolaserresonator nach Anspruch 7, wobei der organische Farbstoff ausgewählt wird zwischen Bis (4-diethylaminodithiobenzyl)nickel oder Bis(4-dimethylaminodithiobenzyl)nickel und das Lösungsmittel eine Lösung von Polymethylmethacrylat (PMMA), von Polyvinylalkohol oder von Polyvinylacetat oder von Polystryrol ist.

9. Mikrolaserresonator nach einem der Ansprüche 2 bis 6, wobei die Dünnschicht (48, 66) sich zur Abscheidung mittels Flüssigphasen-Epitaxie eignet.

10. Mikrolaserresonator nach Anspruch 9, wobei die Dünnschicht durch ein Basismaterial gebildet wird, das mit dem des aktiven Festkörpermediums identisch und mit $Cr^{4+}$- oder $Er^{3+}$- oder $Ho^{3+}$-Ionen dotiert ist.

11. Mikrolaser, einen Mikrolaserresonator nach einem der vorangehenden Ansprüche, Pumpeinrichtungen des Resonators und Erzeugungseinrichtungen eines Strahls (56) zum Auslösen bzw. Einleiten der Sättigung des sättigbaren Absorptionsmaterials umfassend.

## Claims

1. Monolithic microlaser cavity incorporating a solid active medium (46, 64, 74), an input mirror (50, 70, 78), an output mirror (52, 68, 76), a saturable absorber (48, 66) and means (60, 62, 72) permitting the introduction into the active medium of the cavity, by the input face of the microlaser where the cavity input mirror (50, 70, 78) is located, of a beam (56) starting the saturation of the saturable absorber, parallel to the introduction direction into the solid active medium of a beam (54) for pumping said active medium.

2. Microlaser cavity according to claim 1, the saturable absorber being in the form of a thin saturable absorber material film (48, 66, 80) directly deposited on the solid active medium (46, 64, 74).

3. Microlaser cavity according to claim 2, the starting beam introduction means (60, 62, 82) being arranged so as to permit a guided propagation of the starting beam in the plane of the saturable absorber film.

4. Microlaser cavity according to claim 3, the saturable absorber having an etched microsurface (60) so as to permit a guided propagation of the starting beam in the plane of the saturable absorber film (48), following the introduction of the beam into the microlaser and the reflection of said beam against the microsurface (60).

5. Microlaser cavity according to claim 2, the means (72) making it possible to introduce a starting beam being arranged so as to permit the propagation of such a beam in a direction not contained in the plane of the saturable absorber film.

6. Microlaser cavity according to claim 5, the means (72) able to permit the introduction of a starting beam having a microlens portion located on the side of the microlaser cavity input mirror (70).

7. Microlaser cavity according to any one of the claims 2 to 6, the film (48, 66) being formed by an organic dye dissolved in a polymer solvent.

8. Microlaser cavity according to claim 7, the organic dye being chosen from among bis(4-diethylaminodithiobenzyl) nickel or bis(4-dimethylaminodithiobenzyl) nickel, the solvent being a solution of polymethyl methacrylate (PMHA), polyvinyl alcohol, polyvinyl acetate or polystyrene.

9. Microlaser cavity according to any one of the claims 2 to 6, the film (48, 66) being depositable by liquid phase epitaxy.

10. Microlaser cavity according to claim 9, the film being formed from a basic material identical to that of the solid active medium and doped with $Cr^{4+}$ or $Er^{3+}$ or $Ho^{3+}$ ions.

11. Microlaser incorporating a microlaser cavity according to one of the preceding claims, cavity pumping means and means for generating a beam (56) for starting the saturation of the saturable absorber.

FIG. 1

FIG. 2

FIG. 4 A

FIG. 4 B

FIG. 3A

FIG. 3 B

FIG. 3 C

FIG. 3 D

FIG. 3 E

FIG. 5

FIG. 6

FIG. 7A

FIG. 7B

FIG. 8A

FIG. 8B

EP 0 742 613 B1